# FASCICULE DE BREVET EUROPEEN

(11) **EP 2 430 291 B1**
(45) Date de publication et mention de la délivrance du brevet: **31.08.2016**
(21) Numéro de dépôt: 10723640.8
(22) Date de dépôt: 11.05.2010
(51) Int. Cl.: F01D 7/00, B64C 11/06

(54) **TURBOMACHINE AVEC HÉLICE NON CARÉNÉE À PALES À CALAGE VARIABLE**
TURBOMASCHINE UMFASSEND UNVERKLEIDETE VERSTELLBARE PROPELLERBLÄTTER
TURBOMACHINE HAVING UNSHROUDED PROPELLER BLADES WITH VARIABLE PITCH

(30) Priorité: 15.05.2009 FR 0902361
(43) Date de publication de la demande: 21.03.2012
(73) Titulaire: Snecma, 75015 Paris (FR)
(72) Inventeur: BELMONTE, Olivier, c/o Snecma, F-77550 Moissy Cramayel Cedex (FR); BOSCO, Franck, Emmanuel, c/o Snecma, F-77550 Moissy Cramayel Cedex (FR)
(74) Mandataire: Ramey, Daniel
(86) Numéro de dépôt international: PCT/FR2010/000361
(87) Numéro de publication internationale: WO 2010/130893

(56) Documents cités:
- EP-A- 0 363 997
- EP-A- 1 921 325
- FR-A- 2 551 023
- US-A- 3 873 236
- US-A- 4 591 313
- US-A- 4 718 823
- US-A- 5 431 539

## Description

La présente invention concerne une turbomachine comprenant au moins une hélice non carénée dont les pales sont du type à calage variable.

Les documents US-A-4,718 823 et US-A-3,873,236 décrivent des turbomachines dont les aubes de soufflante sont à pas variable.

Une turbomachine du type « open rotor » ou « unducted fan » comprend deux hélices externes non carénées coaxiales et contrarotatives, respectivement amont et aval, qui sont chacune entraînées en rotation par une turbine de la turbomachine et qui s'étendent sensiblement radialement à l'extérieur de la nacelle de cette turbomachine.

Chaque hélice comprend un élément annulaire de rotor comportant des logements sensiblement radiaux répartis autour de l'axe longitudinal de la turbomachine et dans lesquels sont montées des platines sensiblement cylindriques de support des pales de l'hélice. Les platines peuvent tourner cans les logements de l'élément de rotor et sont entraînées en rotation autour des axes des pales par des moyens appropriés de façon à régler le calage angulaire des pales, et à l'optimiser en fonction des conditions de fonctionnement de la turbomachine.

Dans la technique actuelle, les moyens d'entraînement en rotation ces platines comprennent des vérins qui sont portés par une partie tournante de la turbomachine, ce qui est un inconvénient car il existe dans ce cas un risque de mauvaise alimentation des vérins. Par ailleurs, ces vérins sont en fonctionnement soumis à des forces centrifuges relativement importantes qui peuvent notamment gêner leur fonctionnement.

On a déjà proposé de contrôler le calage angulaire des pales d'une hélice de turbomachine par l'intermédiaire d'un anneau de commande qui s'étend autour de l'axe de la turbomachine et qui est relié aux platines par des organes de liaison, cet anneau étant déplaçable en translation le long de l'axe de la turbomachine pour entraîner en rotation les platines autour des axes des pales. Dans la technique actuelle, cet anneau de commande forme un écrou et est monté sur une partie tournante de la turbomachine formant une vis sans fin, la rotation de cette partie tournante provoquant le déplacement de l'anneau en translation le long de l'axe de la turbomachine et donc la rotation des platines de support des pales.

Cependant, cette solution n'est pas non plus satisfaisante car l'ensemble du mécanisme est mis en rotation lors du fonctionnement de la turbomachine. De plus, elle est relativement complexe à réaliser et à mettre en oeuvre.

L'invention a notamment pour but d'apporter une solution simple, efficace et économique à ces problèmes.

Elle propose à cet effet une turbomachine, comprenant au moins une hélice non carénée à pales à calage variable, ces pales étant portées par des platines sensiblement cylindriques montées à rotation autour de leurs axes dans des logements radiaux d'un élément annulaire de rotor et reliées par leurs extrémités radialement internes à un anneau de commande qui est entraîné en rotation autour de l'axe de la turbomachine avec l'élément de rotor, et qui est déplaçable en translation le long de cet axe pour entraîner la rotation des platines autour de leurs axes, l'anneau de commande étant centré et guidé en rotation autour de l'axe de la turbomachine sur des moyens qui sont fixes en rotation et déplaçables en translation le long de cet axe au moyen d'un actionneur porté par le stator de la turbomachine, caractérisée en ce que les moyens de centrage et de guidage de l'anneau de commande comprennent un rail annulaire à section sensiblement en U qui s'étend autour de l'axe de la turbomachine et comprend deux parois latérales définissant entre elles une gorge annulaire débouchant vers l'extérieur et dans laquelle est engagé l'anneau de commande, des roulements étant montés de part et d'autre de l'anneau de commande entre cet anneau et les parois latérales du rail..

Ainsi, selon l'invention, les moyens de déplacement en translation de l'anneau de commande le long de l'axe de la turbomachine sont fixes en rotation et ne sont pas soumis à des efforts centrifuges en fonctionnement. Seul l'anneau de commande et les moyens de liaison de cet anneau aux platines de support des pales sont mobiles en rotation autour de l'axe de la turbomachine.

Selon l'invention, les moyens de centrage et de guidage de l'anneau de commande comprennent un rail annulaire s'étendant autour de l'axe de la turbomachine, et des roulements montés entre ce rail et l'anneau de commande. Ces roulements permettent de limiter l'usure du rail et des moyens de centrage et de guidage.

Le rail a en section une forme sensiblement en U et comprend deux parois latérales définissant entre elles une gorge annulaire débouchant vers l'extérieur et dans laquelle est engagé l'anneau de commande, les roulements étant montés de part et d'autre de l'anneau de commande entre cet anneau et les parois latérales.

Le rail est de préférence formé de deux pièces annulaires fixées l'une à l'autre, une première pièce définissant une des parois latérales du rail et la seconde pièce à section sensiblement en L définissant le fond de la gorge et l'autre paroi latérale du rail. Les deux pièces du rail peuvent être fixées l'une à l'autre par des vis régulièrement réparties autour de l'axe de la turbomachine.

Les roulements sont par exemple des roulements à billes. L'actionneur est par exemple un vérin électrique, hydraulique ou pneumatique.

Chaque moyen de liaison de l'anneau de commande à une platine de support de pale peut comprendre une biellette dont une extrémité est articulée sur un élément fixé ou formé à l'extrémité radialement interne de la platine, et dont l'autre extrémité est articulée sur un élément qui est lui-même articulé sur une chape de l'anneau de commande, autour d'un axe parallèle à l'axe de la turbomachine.

La turbomachine selon l'invention peut être du type comprenant deux hélices non carénées du type précité qui sont coaxiales et contra rotatives.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique en coupe axiale d'une turbomachine à hélices non carénées ;
- les figures 2 et 3 sont des vues schématiques des moyens selon l'invention d'entraînement en rotation des platines de support des pales d'une hélice non carénée de turbomachine, et représentent deux positions angulaires différentes de calage de ces platines ;
- les figures 4 et 5 sont des vues schématiques partielles en perspective d'un exemple de réalisation des moyens d'entraînement des figures 2 et 3.

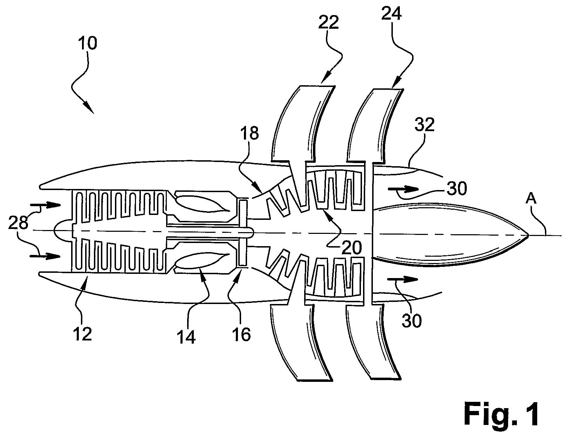

On se réfère d'abord à la figure 1 qui représente une turbomachine 10 à hélices non carénées (en anglais « open rotor » ou « unducted fan ») qui comporte d'amont en aval, dans le sens d'écoulement des gaz à l'intérieur de la turbomachine, un compresseur 12, une chambre annulaire de combustion 14, une turbine amont 16 haute-pression, et deux turbines aval 18, 20 basse-pression qui sont contrarotatives, c'est-à-dire qu'elles tournent dans des sens opposés autour de l'axe longitudinal A de la turbomachine.

Chacune de ces turbines aval 18, 20 est solidaire en rotation d'une hélice externe 22, 24 qui s'étend radialement à l'extérieur de la nacelle 26 de la turbomachine, cette nacelle 26 étant sensiblement cylindrique et s'étendant le long de l'axe A autour du compresseur 12, de la chambre de combustion 14, et des turbines 16, 18 et 20.

Le flux d'air 28 qui pénètre dans le compresseur 12 est comprimé puis est mélangé à du carburant et brûlé dans la chambre de combustion 14, les gaz de combustion étant ensuite injectés dans les turbines pour entraîner en rotation les hélices 22, 24 qui fournissent la majeure partie de la poussée générée par la turbomachine. Les gaz de combustion sortent des turbines et sont enfin expulsés à travers une tuyère 32 (flèches 30) pour augmenter cette poussée.

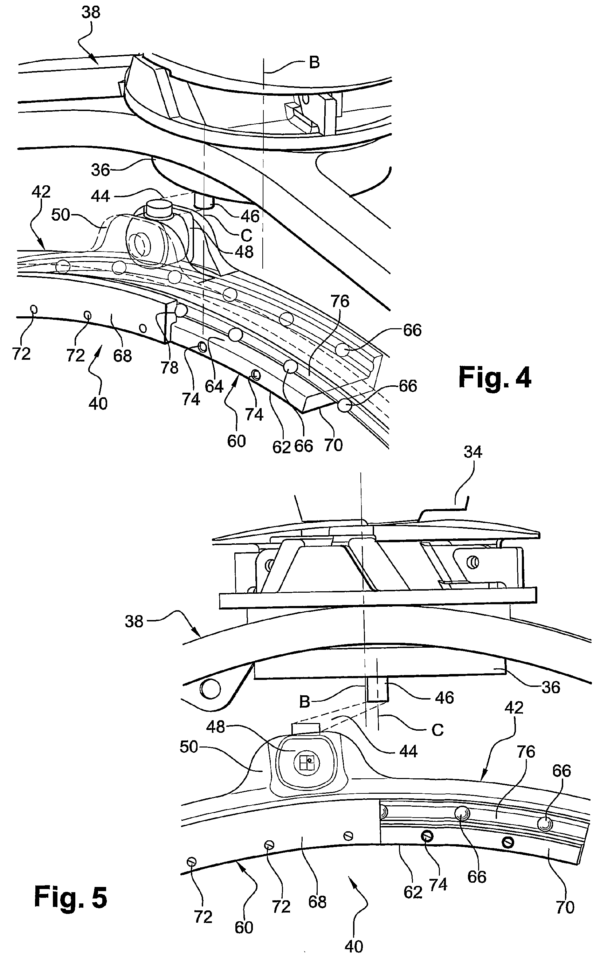

Les hélices 22, 24 sont disposées coaxialement l'une derrière l'autre. Chacune de ces hélices 22, 24 comporte une pluralité de pales 34 portées par des platines 36 sensiblement cylindriques qui sont engagées dans des logements radiaux d'un élément annulaire de rotor 38 qui est partiellement représenté aux figures 4 et 5. Cet élément de rotor 38 s'étend autour de l'axe A de la turbomachine et est relié par des moyens appropriés au rotor d'une des turbines aval 18, 20 pour son entraînement en rotation.

Les platines 36 de support des pales 34 sont montées à rotation autour de leurs axes dans les logements radiaux de l'élément de rotor 38 et sont reliées à des moyens 40 d'entraînement en rotation de ces platines de façon à régler le calage angulaire des pales autour de leurs axes B et à l'optimiser en fonction des conditions de fonctionnement de la turbomachine.

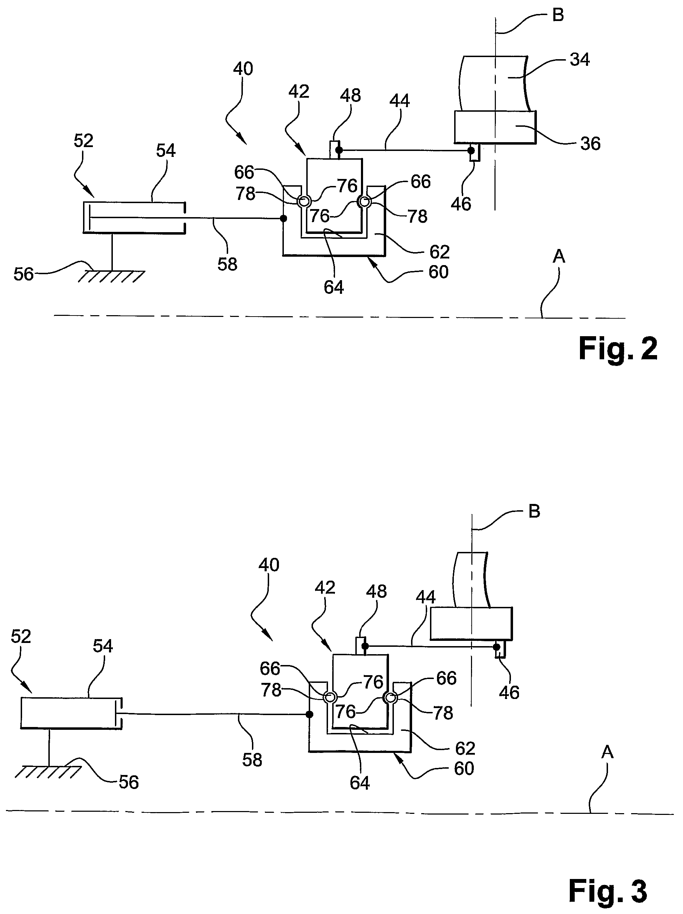

Les moyens 40 selon l'invention d'entraînement en rotation des platines 36 de support des pales 34 sont schématiquement représentés aux figures 2 et 3 et plus en détail aux figures 4 et 5.

Ces moyens d'entraînement 40 comprennent d'une part des éléments tournants reliés aux platines 36 de support des pales et donc à l'élément de rotor 38, et d'autre part des éléments non tournants reliés au stator de la turbomachine.

Les éléments tournants des moyens d'entraînement 40 selon l'invention comprennent un anneau de commande 42 qui s'étend autour de l'axe A de la turbomachine et qui est entraîné en rotation autour de cet axe avec l'élément de rotor 38. Cet anneau de commande 42 est relié par des organes de liaison du type biellette aux platines 36 de support des pales.

Chaque biellette 44 de liaison d'une platine 36 à l'anneau 42 comprend une extrémité articulée sur un pion cylindrique 46 s'étendant radialement vers l'intérieur depuis l'extrémité radialement interne de la platine, et une autre extrémité articulée sur un élément 48 lui-même articulé sur une chape 50 de l'anneau 42. Les axes d'articulation des biellettes sur la platine 36 et l'élément 48 sont parallèles et orientés sensiblement parallèlement à l'axe B de la platine correspondante. L'axe C du pion cylindrique 46 de la platine est parallèle à l'axe B de cette platine et est situé au voisinage de la périphérie externe de la platine de façon à ce que les axes B et C ne soient pas alignés l'un avec l'autre. L'axe d'articulation de l'élément 48 sur la chape de l'anneau est sensiblement parallèle à l'axe A de la turbomachine.

L'anneau de commande 42 est déplaçable en translation le long de l'axe A de la turbomachine à l'aide des éléments non tournants des moyens d'entraînement 40 selon l'invention, qui comprennent un actionneur 52 dont le corps 54 est fixé sur le stator de la turbomachine et la tige 58 est reliée à des moyens 60 de centrage et de guidage en rotation de l'anneau de commande 42 autour de l'axe A, de façon à déplacer ces moyens 60 le long de l'axe A.

L'actionneur 52 est un vérin hydraulique, pneumatique ou électrique.

Les moyens 60 de centrage et de guidage de l'anneau 42 comprennent un rail annulaire 62 qui s'étend autour de l'axe A de la turbomachine et qui est déplacé en translation le long de cet axe par l'actionneur 52, ce rail comportant une gorge annulaire 64 dans laquelle sont montés des roulements 66 de guidage de l'anneau de commande 42.

Dans l'exemple de réalisation des figures 4 et 5, le rail 62 est formé de deux pièces annulaires coaxiales 68, 70 qui sont fixées l'une à l'autre et délimitent entre elles la gorge 64 précitée de logement de l'anneau 42. La première pièce 68 est sensiblement plane et radiale et définit une première paroi latérale de la gorge. La seconde pièce 70 a en section une forme sensiblement en L et comprend une partie plane qui définit l'autre paroi latérale de la gorge 64, et qui est reliée à sa périphérie interne à une extrémité d'une partie cylindrique qui définit le fond de la gorge 64 et qui est fixée par son extrémité libre à la périphérie interne de la première pièce 68.

Cette première pièce 68 comprend à sa périphérie interne des orifices axiaux 72 de passage de vis qui sont alignés avec des orifices 74 taraudés de l'extrémité libre de la partie cylindrique de la seconde pièce 70. Ces orifices 72, 74 sont régulièrement répartis autour de l'axe A.

Les roulements 66 sont ici deux roulements à billes qui sont montés de part et d'autre du rail 62, entre ce rail et les parois latérales précitées du rail. Les billes de chaque roulement 66 sont ici guidées dans des rainures annulaires 76, 78 coaxiales et en regard qui sont formées respectivement dans la paroi latérale du rail 62 et la paroi latérale correspondante de l'anneau 42.

Les moyens d'entraînement 40 selon l'invention fonctionnent de la façon suivante. Le déplacement de la tige 58 de l'actionneur 52 le long de l'axe A de la turbomachine entraîne le déplacement en translation du rail 62 le long de cet axe et donc de l'anneau de commande 42 qui est logé dans la gorge annulaire 64 du rail. Le déplacement en translation de l'anneau 42 provoque, par l'intermédiaire des biellettes 44, la rotation des platines 36 autour des axes B des pales 34. Dans la figure 2, la tige 58 de l'actionneur est en position rentrée et le rail 62 et l'anneau 42 sont en position reculée dans laquelle les pales 34 ont une certaine position angulaire par rapport à leurs axes B. Dans la figure 3, la tige 58 de l'actionneur est en position sortie et le rail et l'anneau sont en position avancée dans laquelle les pales ont une autre position angulaire par rapport à leurs axes B. Le débattement angulaire maximal des pales autour de leurs axes est de 75° environ (entre -30 et +45° environ).

La vitesse de rotation V de l'anneau de commande 42 est de l'ordre de 73m/s dans un cas particulier de réalisation (V = ω.R, ω = 1000tr/min ou 104rad/s et R = 726mm). Cette vitesse est nettement plus faible que celle d'un élément tournant d'un corps haute-pression de turbomachine, qui est de V' = 102m/s dans un cas particulier (ω = 16 000tr/min ou 1674 rad/s et R = 61mm).

## Revendications

1. Turbomachine, comprenant au moins une hélice (22, 24) non carénée à pales à calage variable, ces pales (34) étant portées par des platines (36) sensiblement cylindriques montées à rotation autour de leurs axes (B) dans des logements radiaux d'un élément annulaire de rotor (38) et reliées par leurs extrémités radialement internes à un anneau de commande (42) qui est entraîné en rotation autour de l'axe (A) de la turbomachine avec l'élément de rotor, et qui est déplaçable en translation le long de cet axe pour faire tourner les platines autour de leurs axes, l'anneau de commande étant centré et guidé en rotation autour de l'axe de la turbomachine sur des moyens (60) qui sont fixes en rotation et déplaçables en translation le long de cet axe au moyen d'un actionneur (52) porté par le stator (56) de la turbomachine, **caractérisée en ce que** les moyens (60) de centrage et de guidage de l'anneau de commande (42) comprennent un rail annulaire (62) à section sensiblement en U qui s'étend autour de l'axe de la turbomachine et comprend deux parois latérales définissant entre elles une gorge annulaire (64) débouchant vers l'extérieur et dans laquelle est engagé l'anneau de commande (42), des roulements (66) étant montés de part et d'autre de l'anneau de commande entre cet anneau et les parois latérales du rail.

2. Turbomachine selon la revendication 1, **caractérisée en ce que** le rail (62) est formé de deux pièces annulaires (68, 70) coaxiales fixées l'une à l'autre, une première pièce (68) définissant une des parois latérales du rail, et la seconde pièce (70) à section sensiblement en L définissant le fond de la gorge (64) et l'autre paroi latérale du rail.

3. Turbomachine selon la revendication 2, **caractérisée en ce que** les deux pièces (68, 70) du rail (62) sont fixées l'une à l'autre par des vis régulièrement réparties autour de l'axe (A) de la turbomachine.

4. Turbomachine selon l'une des revendications 1 à 3, **caractérisée en ce que** les roulements (66) sont des roulements à billes.

5. Turbomachine selon l'une des revendications précédentes, **caractérisée en ce que** l'actionneur (52) est un vérin électrique, hydraulique ou pneumatique.

6. Turbomachine selon l'une des revendications précédentes, **caractérisée en ce que** l'anneau de commande (42) est relié aux platines (36) de support de pale (34) par des bielles comprenant une extrémité articulée sur un élément fixé ou formé à l'extrémité radialement interne de la platine, et une autre extrémité articulée sur un élément (48) qui est lui-même articulé sur une chape (50) de l'anneau de commande, autour d'un axe parallèle à l'axe (A) de la turbomachine.

7. Turbomachine selon l'une des revendications précédentes, **caractérisée en ce qu'**elle comprend deux hélices (22, 24) non carénées du type précité qui sont coaxiales et contrarotatives.

## Patentansprüche

1. Turbomaschine mit mindestens einer unverkleideten Luftschraube (22, 24) mit Blattwinkelverstellung, wobei die Blätter (34) getragen werden von im Wesentlichen zylindrischen Platten (36), die in den radialen Aufnahmen eines ringförmigen Rotorelements (38) drehbar um ihre Achsen (B) montiert sind, und über ihre radial inneren Enden mit einem Verstellring (42) verbunden sind, welcher vom Rotorelement um eine Achse (A) der Turbomaschine drehbar angetrieben wird und auf dieser Achse verschiebbar ist, damit sich die Platten um ihre Achsen drehen, wobei der Verstellring zentriert ist und auf Mitteln (60), die an dieser Achse drehbar mit Hilfe eines vom Stator (56) der Turbomaschine getragenen Stellglieds verschiebbar befestigt sind, drehbar um die Turbomaschinenachse geführt wird, **dadurch gekennzeichnet, dass** die Zentriermittel (60) und die Führungsmittel des Verstellrings (42) eine ringförmige Schiene (62) mit im Wesentlichen u-förmigem Querschnitt umfassen, die sich um die Achse der Turbomaschine erstreckt, und zwei Seitenwände umfasst, welche eine nach außen führende ringförmige Nut (4) begrenzen, in welche der Verstellring (42) eingreift, wobei zu beiden Seiten des Verstellrings zwischen diesem Ring und den Seitenwänden der Schiene Lager (66) montiert sind.

2. Turbomaschine nach Anspruch 1, **dadurch gekennzeichnet, dass** die Schiene (62) durch zwei ringförmige koaxiale Stücke (68, 70) gebildet wird, die aneinander befestigt sind, wobei ein Teil (68) eine der Seitenwände der Schiene begrenzt, und der zweite Teil (70) mit im Wesentlichen L-förmigem Querschnitt den Boden der Nut (64) und die andere Seitenwand der Schiene begrenzt.

3. Turbomaschine nach Anspruch 2, **dadurch gekennzeichnet, dass** die zwei Teile (68, 70) der Schiene (62) mit gleichmäßig, auf einer Achse (A) der Turbomaschine verteilten Schrauben aneinender befestigt werden.

4. Turbomaschine nach einem der Ansprüche 1 bis 3, **dadurch gekennzeichnet, dass** die Lager (56) Kugellager sind.

5. Turbomaschine nach einem der vorhergehenden Ansprüche, **dadurch gekennzeichnet, dass** das Stellglied (52) ein elektrischer, hydraulischer oder pneumatischer Zylinder ist.

6. Turbomaschine nach einem der vorhergehenden Ansprüche, **dadurch gekennzeichnet, dass** der Verstellring (42) mit den Trägerplatten (36) des Blatts (34) über Pleuel verbunden ist, deren eines Ende an einem festen Element gelenkig befestigt ist oder am radial inneren Ende gebildet wird, und deren anderes Ende an einem Element (48) gelenkig befestigt ist, das wiederum an einem Bügel (50) des Verstellrings an einer parallel zur Achse (A) der Turbomaschine verlaufenden Achse gelenkig befestigt ist.

7. Turbomaschine nach einem der vorhergehenden Ansprüche, **dadurch gekennzeichnet, dass** sie zwei unverkleidete Luftschrauben (22, 24) des vorgenannten Typs umfasst, die koaxial angeordnet sind und sich gegeneinander drehen.

## Claims

1. A turbomachine comprising at least one unducted propeller (22, 24) of variable pitch blades, the blades (34) being carried by substantially cylindrical plates (36) mounted to pivot about their respective axes (B) in radial housings of an annular rotor element (38) and connected via their radially inner ends to a control ring (42) that is driven in rotation about the axis (A) of the turbomachine together with the rotor element, and that is movable in translation along said axis to cause the plates to pivot about their respective axes, the control ring being centered and guided in rotation about the axis of the turbomachine on means (60) that are stationary in rotation and movable in translation along said axis by means of an actuator (52) carried by the stator (56) of the turbomachine, **characterized in that** the means (60) for centering and guiding the control ring (42) comprise an annular rail (62) of substantially U-shaped section that extends around the axis of the turbomachine and that comprises two side walls that define between them an annular groove (64) that is outwardly open, and in which the control ring (42) is engaged, rolling means (66) being mounted on either side of the control ring between said ring and the side walls of the rail.

2. A turbomachine according to claim 1, **characterized in that** the rail (62) is made up of two annular parts (68, 70) of common axis that are fastened to each other, a first part (68) defining one of the side walls of the rail, and the second part (70) having a substantially L-shaped section defining both the bottom of the groove (64) and the other side wall of the rail.

3. A turbomachine according to claim 2, **characterized in that** the two parts (68, 70) of the rail (62) are fastened to each other by screws regularly distributed around the axis (A) of the turbomachine.

4. A turbomachine according to any one of claims 1 to 3, **characterized in that** the rolling means (66) are ball bearings.

5. A turbomachine according to any preceding claim, **characterized in that** the actuator (52) is an electric, hydraulic, or pneumatic cylinder.

6. A turbomachine according to any preceding claim, **characterized in that** the control ring (42) is connected to the plates (36) for supporting the blades (34) by links each having one end hinged to an element that is fastened to or formed on the radially inner end of the plate, and another end hinged to an element (48) that is itself hinged to a clevis (50) of the control ring about an axis that is parallel to the axis (A) of the turbomachine.

7. A turbomachine according to any preceding claim, **characterized in that** it has two contrarotating unducted propellers (22, 24) of the above-specified type that share a common axis.
